# EUROPEAN PATENT SPECIFICATION

(11) **EP 3 067 216 B1**
(45) Date of publication and mention of the grant of the patent: **16.01.2019**
(21) Application number: 15158535.3
(22) Date of filing: 10.03.2015
(51) Int. Cl.: B41M 3/14, C09D 11/037, C09D 11/50, B42D 25/00, C09D 5/32, B42D 25/382

(54) **CHROMOPHORIC COMPOSITIONS**
CHROMOPHORE ZUSAMMENSETZUNGEN
COMPOSITIONS DE CHROMOPHORES

(43) Date of publication of application: 14.09.2016
(60) Divisional application: 17158595.3
(73) Proprietor: BASF SE, 67056 Ludwigshafen am Rhein (DE)
(72) Inventor: Reichert, Hans, 79618 Rheinfelden (DE); Reichelt, Helmut, 67435 Neustadt (DE); Fischer, René, 4105 Biel-Benken (CH); Eberius, Karin, 79639 Grenzach (DE)
(74) Representative: BASF IP Association

(56) References cited:
- WO-A1-2008/086931
- WO-A1-2012/069518
- WO-A1-2012/152584
- US-A1- 2002 197 564
- US-A1- 2012 129 090
- BIGOLI F ET AL: "New neutral nickel dithiolene complexes derived from 1,3- dialkylimidazolidine-2,4,5-trithione, showing remarkable near-IR absorption", JOURNAL OF THE CHEMICAL SOCIETY, CHEMICAL COMMUNICATIONS, CHEMICAL SOCIETY. LETCHWORTH, GB, no. 3, 1 January 1995 (1995-01-01), pages 371-2CODEN, XP009098957, ISSN: 0022-4936

## Description

The present invention relates to compositions, comprising an IR absorbing compound, which is a metal dithiolene complex of formula (IIa) or (IIb) and specific stabilizing compounds which prevent the degradation of the IR absorbing compound. Further aspects of the invention are a printing ink containing the IR absorbing compound and said specific stabilizing compounds, a security document comprising a substrate and the hardened printing ink and the use of the specific stabilizing compounds as stabilizers for the IR absorbing compounds in radically polymerisable compositions, which are oxidatively drying laquers, inks, paints or coatings.

### DESCRIPTION OF THE RELATED ART

Colourless or barely coloured IR absorbers meet a significant technical need in a wide range of applications, such as security printing (bank notes, credit cards, identity cards, passports etc.), invisible and/or IR readable bar codes, the laser-welding of plastics, the curing of surface-coatings using IR radiators, the drying and curing of prints, the fixing of toners on paper or plastics, optical filters for PDPs (plasma display panels), laser marking e.g. of paper or plastics, the heating of plastics preforms, heat shielding applications, etc.

A large number of organic and inorganic substances belonging to different compound classes and with a great variety of different structures are known for the application as IR absorbers. Notwithstanding that large numbers of known compound classes and structures, the provision of products with a complex profile of properties often presents difficulties. There is a continuing demand for IR absorbers that are "colourless" (i.e. with the minimum possible inherent colour), and that simultaneously meet the technical stability requirements (e. g. chemical stability, heat stability and/or light stability).

A special field of application for colourless IR absorbers regards inks for printing processes which are used for printing currency and other security documents, also referred to as "security printing". Typical security printing processes are processes, wherein an ink composition is employed that is designed to selectively absorb radiation in parts of the "optical infrared" spectrum, whilst being transparent in other parts of it. IR absorbers for security printing are available, for example, from "American Dye Source", but virtually all of them have a noticeable absorption in the VIS range of the spectrum (from 400 to 700 nm).

US7282164 discloses a stabilized ink composition comprising a metal-dithiolene dye and a singlet oxygen quencher, such as, for example, ascorbic acid and sodium azide.

JP56122876A relates to an ink composition which contains a dye, dialkylthiourea and water. The composition has antirust property. The dialkylthiourea exerts antirust effect on metal ball and chip and includes, for example, 1,3-dimethylthiourea, 1,3-diethylthiourea and 1,3-dibutyl-thiourea. The dye is soluble in aqueous medium and includes, for example, C.I. 45410 and C.I. 42755.

JP 59045372A relates to a composition containing an agent of formula R1R2N-C(:Y)-NR3R4 (I), wherein Y is =0 or =S and R1-4 are each H or lower alkyl provided that at least 1 is H but not all. When used for a ball-pointed pen, the composition may include also an anti-corrosive agent (e.g. benzotriazole, Na octyloxymethane phosphonate or dioctyl thiophosphate) for preventing the corrosion of metal ball.

JP05271603A discloses an ink for ball point pen having tip made of stainless steel comprising an pigment, dispersant and water as a base material and containing a dialkylthiourea in an amt. of 0.05-0.1 wt.% based on the total of the ink. The ink reduces the friction between ball and holder and ball in stainless tip of ball point pen.

KR2006005625A relates to an ink composition which comprises a thiourea derivative represented by formula 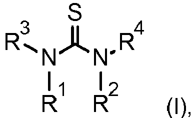 a colorant; and a solvent, wherein R¹ to R⁴ are independently H, a substituted or unsubstituted C₁-C₁₀alkyl group, a substituted or unsubstituted C₁-C₂₀heteroalkyl, alkoxy, alkyl sulfonamide, acylamino, alkylureido, hydroxyalkyloxyalkyl, dialkylaminoalkyl or pyridylalkyl group, a substituted or unsubstituted C₂-C₂₀alkenyl, alkoxycarbonyl or alkoxycarbonylamino group, a substituted or unsubstituted C₆-C₂₀ aryl sulfonamide, arylureido, pyridylalkyl, imidazolyl, arylalkyl, heteroaryl, heteroarylalkyl or heteroarylalkenyl group, a carbamoyl group, a sulfamoyl group, a sulfo group and its salt, a carboxyl group and its salt, a hydrazine group, a hydrazone group, or a substituted or unsubstituted C₃-C₂₀hetero cycloalkyl group; and R³ and R⁴ can be connected together to form a substituted or unsubstituted C₁-C₂₀alkylene group. The ink composition is reduced in the mobility of a colorant, is improved in the adhesion to media, is minimized in bleeding, and is enhanced in wafer fastness, dry and wet rubbing resistance and storage stability.

JP 2009292056A relates to a writing implement comprises water based ink composition containing coloring agent, water, thiocyanuric acid and/or its salt, where the ink is incorporated into an viewable axial cylinder from the outside. The color of ink accommodated in the transparent container of writing implement is not faded or changed to brown color with respect to time.

IR-absorbing compounds are, for example, described in WO2006/015414, US2008/0241492, US5,282,894, WO2007/091094, WO2007/132214, M. Arca et al. describe in J. Chem. Soc., Dalton Trans. 1998, 3731-3736, JP2003-262953 A, JP2004-045653 A, JP2005-99755 A, M.C. Aragoni et al. describe in Eur. J. Inorg. Chem. 2003, 1939-1947 and WO 2008/086931, WO 2012/152584 and WO 2012/069518. which relates 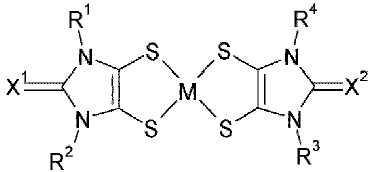 to the use of specific metal complexes of formula
as colourless IR absorbers in security printing.

There is still a need for high-end applications of IR absorbing compounds of improving their fastness properties against oxidation. This property is particularly important for applications in the field of security printing. It is of prime importance in security printing applications that the IR absorbing properties remain high after the drying/hardening step of the printing ink and that the IR spectrum remains essentially unchanged as compared to its initial form before the drying/hardening step. Undergoing essentially no change in the absorption characteristic is fundamental for quality control and for the detection of counterfeit.

### DESCRIPTION OF THE INVENTION

It has now been found, surprisingly, that IR absorbers combined with specific compounds having a sulphur functional group exhibit high resistance against oxidative degradation. The absorption spectrum remains essentially unchanged under oxidative conditions. Due to this unique application property such compositions are particularly suitable for security printing, especially for bank notes.

One aspect of the invention is a composition, comprising
(a) an IR absorber, wherein the IR absorber is a metal dithiolene complex of formula (IIa) or (IIb) 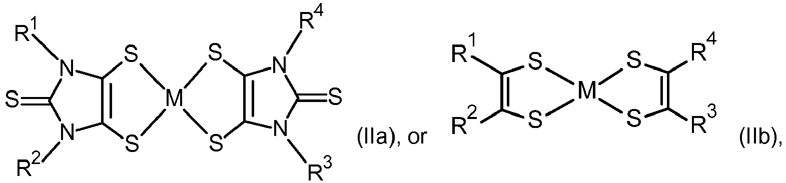 wherein
   M is Ni, Pd, or Pt;
   R¹, R², R³ and R⁴ are independently of each other C₁-C₂₅alkyl, perfluoro-C₁-C₂₅alkyl, C₆-C₂₄aryl, which may optionally substitueted with F, Cl, CF₃, or OCH₃; or C₂-C₂₀heteroaryl;
(b) a protective agent having a structural element of formula 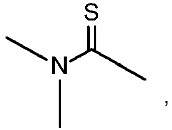 or 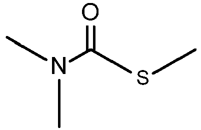 wherein each open valence 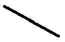 indicates a bond to an organic residue and wherein the structural element may be part of a ring system, wherein the protective agent is a compound of formula (X) 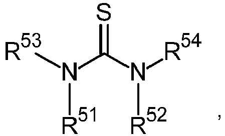 wherein R⁵¹ and R⁵² are independently of each other C₁-C₁₈alkyl, C₁-C₁₈alkenyl or C₆-C₁₀aryl, which may optionally be substituted by Cl, Br or F;
   or R⁵¹ and R⁵² together with the atoms to which there are bonded form a ring 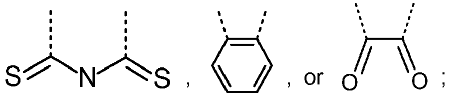 ------ indicates the bond which forms the ring;
   R⁵³ and R⁵⁴ are independently of each other H, C₁-C₁₈alkyl or C₁-C₁₈alkenyl which may optionally be substituted by Cl, Br or F; or
   a compound of formulae (XI) 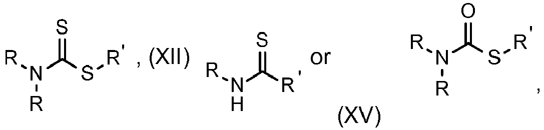 R and R' are independently C₁-C₈alkyl, C₂-C₈alkenyl, phenyl, benzyl, phenethyl, naphthyl or trichlorallyl; or a compound of formula 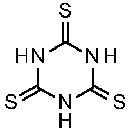 (trithiocyanuric acid), 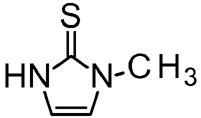 (2-mercapto-1-methylimidazole), 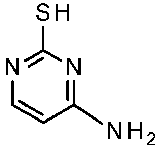 (4-amino-2-mercaptopyrimidine), 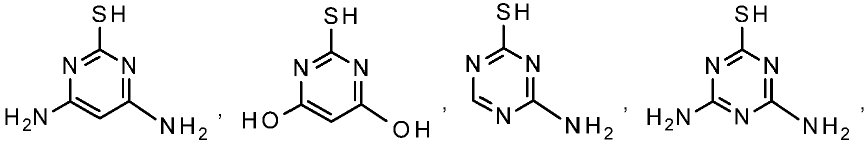 or 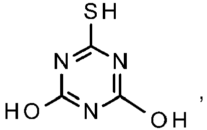 wherein the composition is part of a radically polymerisable composition, which is an oxidatively drying coating, paint, lacquer or ink.

The compositions have additionally at least one of the following advantageous properties:
- good fastness to chemicals to solvents (like toluene, acetone or dichloromethane),
- good fastness to boiling water,
- good fastness to light,
- colourlessness (i.e. minimal absorption in the VIS range of the spectrum (from 400 to 700 nm))
- good heat stability,
- high compatibility with a multiplicity of formulations, in particular oxidative hardening printing ink formulations used especially in security printing.

For illustration: nickel dithiolene complexes with simple alkyl substituents (like C-1, C-2, or C-3) are of high interest as colorless IR absorbers, but are of limited use for e.g. in security printing due to their insufficient fastness against solvents like e.g. acetone, toluene, chlorobenzene, ethylacetate and 1,2-dichloroethane or against hypochlorite and boiling water.

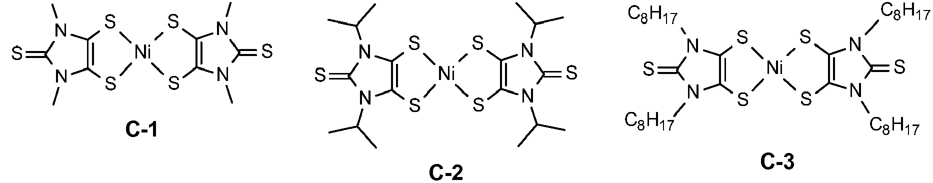

On the other hand said nickel dithiolene complexes exhibit very good resistance against the solvents mentioned above, hypochlorite and boiling water when used in combination with the protecting agents of the present invention.

The weight ratio between IR absorber and protective agent can vary in a wide range. For example from 10 : 1 to 1 : 10, preferably from 5 : 1 to 1 : 5.

The IR absorber is a metal dithiolene complex of formula (IIa) or (IIb) 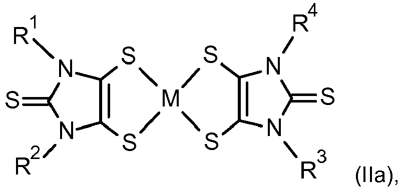 or 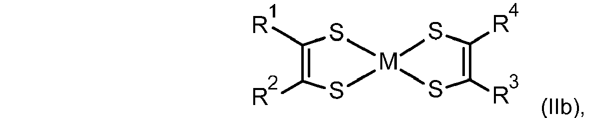 wherein
M is Ni, Pd, or Pt;
R¹, R², R³ and R⁴ are independently of each other C₁-C₂₅alkyl, perfluoro-C₁-C₂₅alkyl, C₆-C₂₄aryl, which may optionally substitueted with F, Cl, CF₃, or OCH₃; or C₂-C₂₀heteroaryl. The alkyl or alkenyl groups may be linear or branched. Aryl means especially phenyl or naphthyl. Heteroaryl is, for example pyrrolidine, piperidine, 2-methylpiperidine and morpholine. These definitions apply for all structural formulae.

Individual IR absorber compounds which are particularly suitable are compounds of the following formulae:

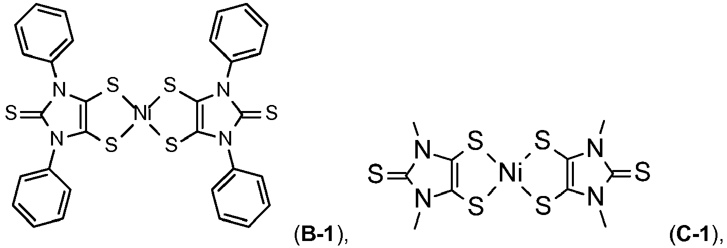

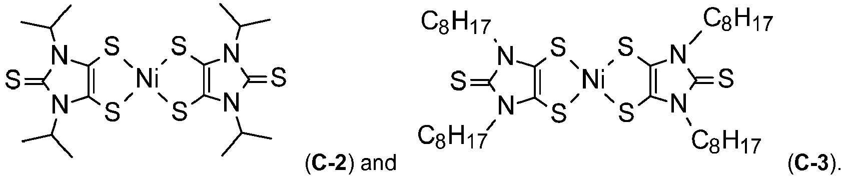

The protective agent is a compound of formula (X) 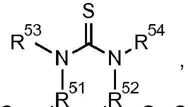 wherein R⁵¹ and R⁵² are independently of each other C₁-C₁₈ alkyl, C₁-C₁₈ alkenyl or C₆-C₁₀aryl, which may optionally be substituted by Cl, Br or F;
or R⁵¹ and R⁵² together with the atoms to which there are bonded form a ring 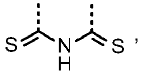 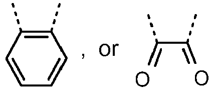 ------ indicates the bond which forms the ring;
R⁵³ and R⁵⁴ are independently of each other H, C₁-C₁₈alkyl or C₁-C₁₈alkenyl which may optionally be substituted by Cl, Br or F;
a compound of formulae (XI) 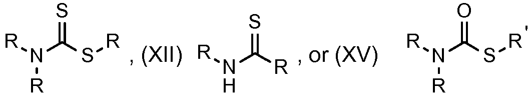 R and R' are independently C₁-C₈alkyl, C₂-C₈alkenyl, phenyl, benzyl, phenethyl, naphthyl or trichlorallyl;
or a compound of formula 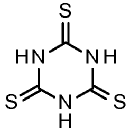 (trithiocyanuric acid), 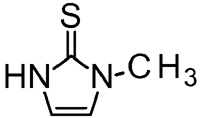 (2-mercapto-1-methylimidazole), 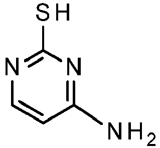 (4-amino-2-mercaptopyrimidine), 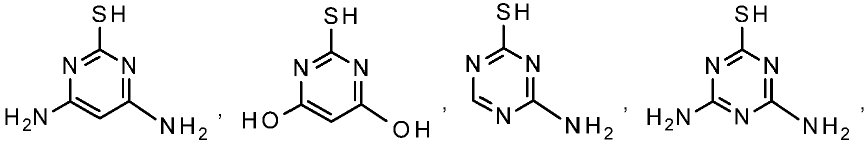 or 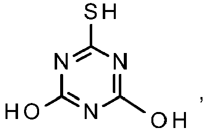 Individual protective compounds are compounds of the following formulae:
a compound of formula 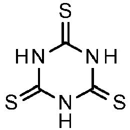 (trithiocyanuric acid), 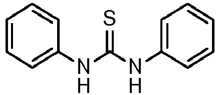 (diphenyl thiourea), 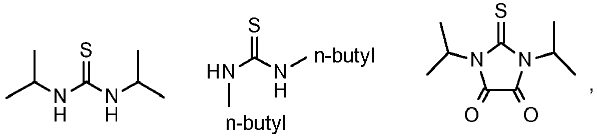 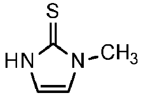 (2-mercapto-1-methylimidazole), 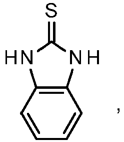 (2-mercapto-benzimidazole), 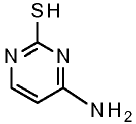 (4-amino-2-mercaptopyrimidine),

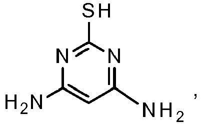

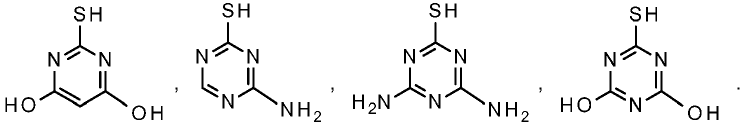

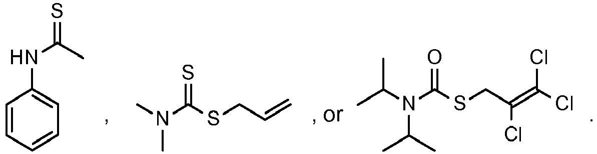

Of particular interest are compounds of the following formulae: 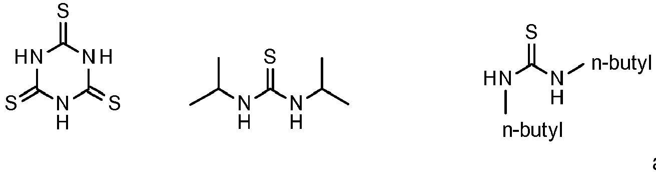 and

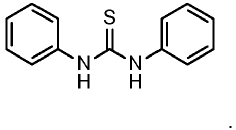

The compositions of IR absorbers and protective agent may be physical mixtures.

In an alternative the compositions may comprise coated particles where the IR absorber forms the core and the protective agent forms the shell. Such mixtures can be obtained e.g. by dispersing the IR absorber in a solvent in which the protective agent is dissolved and subsequent, slow removal of the solvent.

In another alternative the compositions may also comprise mixed crystals or solid solutions obtained, for example, by dissolving both the IR absorber and the protective agent in a suitable solvent and subsequent co-precipitation of the dissolved material. Another way to obtain solid solutions or mixed crystals is salt kneading of both components.

The compositions may also comprise powder-powder mixtures obtained by co-milling, co-kneading or co-sieving of IR absorber and protective agent.

The compositions may be part of an organic coating composition.

The compositions of the present invention can be used inter alia for security printing, invisible and/or IR readable bar code.

Security printing is the field that deals with the printing of items such as currency, passports, tamper-evident labels, stock certificates, postage stamps, identity cards, etc. The main goal of security printing is to prevent forgery, tampering or counterfeiting.

In the field of automated banknote processing, IR-absorption plays an important role. Most of the currently circulating currency carries not only visibly coloured printings, but also specific features which are only detectable in the infrared part of the spectrum. Generally, these IR-features are implemented for use by automatic currency processing equipment, in banking and vending applications (automatic teller machines, automatic vending machines, etc.), in order to recognize a determined currency bill and to verify its authenticity, in particular to discriminate it from replicas made by colour copiers.

All security documents are required to have good stability and durability. In the case of bank notes, these requirements are extreme, as bank notes are subjected to toughest use conditions by the public - they are subjected to material stress by folding, crumpling etc., subjected to abrasion, exposed to weather, exposed to bodily fluids such as perspiration, laundered, dry-cleaned, ironed etc. - and, after having been subjected to this, are expected to be as legible as when they started. Furthermore, it is essential that the documents nevertheless should have a reasonable life time, ideally of some years, despite suffering the afore-mentioned conditions. During this time, the documents, and thus the inks on them (including invisible security markings), should be resistant to fading or colour change. Hence, any ink used in a security printing process should, when cured, be robust, water-resistant, resistant to various chemicals and flexible. The ingredients of the ink, in particular chromophores and IR absorbers should resist oxidative degradation. Moreover, as certain states are moving away from the use of paper as the substrate for bank notes, the employed printing ink formulations should be useable on plastics as well as paper.

Consequently another aspect of the invention is a printing ink formulation, especially for security printing, comprising
a) a composition as described above,
b) a polymeric binder,
c) optionally a solvent,
d) optionally at least one colorant, and
e) optionally at least one further additive.

In security printing, the compositions of the present invention are added to a printing ink formulation. Suitable printing inks are water-based, oil-based or solvent-based printing inks, based on pigment or dye, for inkjet printing, flexographic printing, screen printing, intaglio printing, offset printing, laser printing or letterpress printing and for use in electrophotography.

In the context of the present invention, the expression "printing ink" also encompasses formulations that in addition to the compositions of the present invention comprise a colorant. The expression "printing ink" also encompasses printing lacquers that comprise no colorant.

Suitable components of printing inks are conventional and are well known to those skilled in the art. Examples of such components are described in "Printing Ink Manual", fourth edition, Leach R. H. et al. (eds.), Van Nostrand Reinhold, Wokingham, (1988). Details of printing inks and their formulation are also disclosed in "Printing Inks"-Ullmann's Encyclopedia of Industrial Chemistry, Sixth Edition, 1999 Electronic Release. A formulation of an IR-absorbing intaglio ink formulation is described in US 20080241492 A1.

The printing ink formulation according to the invention contains in general from 0.0001 to 25% by weight, preferably from 0.001 to 15% by weight, in particular from 0.01 to 5% by weight, based on the total weight of the printing ink formulation, of component a).

The IR absorbers, especially the metal dithiolene complexes of formula **I,** are present in the printing ink formulation in dissolved form or in solid form (in a finely divided state).

The weight ratio between IR absorber and protective agent can vary in a wide range. For example from 10 : 1 to 1 : 10, preferably from 5 : 1 to 1 : 5

The printing ink formulation according to the invention contains in general from 5 to 74% by weight, preferably from 10 to 60% by weight, more preferably from 15 to 40% by weight, based on the total weight of the printing ink formulation, of component b).

Suitable solvents are selected from water, organic solvents and mixtures thereof. For the purpose of the invention, reactive monomers which also act as solvents are regarded as part of the afore-mentioned binder component b).

The binder is, for example, a high-molecular-weight organic compound conventionally used in coating/ink compositions. The high molecular weight organic material may be of natural or synthetic origin. High molecular weight organic materials usually have molecular weights of about from 10³ to 10⁸ g/mol or even more. They may be, for example, natural resins, drying oils, rubber or casein, or natural substances derived therefrom, such as chlorinated rubber, oil-modified alkyd resins, viscose, cellulose ethers or esters, such as ethylcellulose, cellulose acetate, cellulose propionate, cellulose acetobutyrate or nitrocellulose, but especially totally synthetic organic polymers (thermosetting plastics and thermoplastics), as are obtained by polymerisation, polycondensation or polyaddition. From the class of the polymerisation resins there may be mentioned, especially, polyolefins, such as polyethylene, polypropylene or polyisobutylene, and also substituted polyolefins, such as polymerisation products of vinyl chloride, vinyl acetate, styrene, acrylonitrile, acrylic acid esters, methacrylic acid esters or butadiene, and also copolymerisation products of the said monomers, such as especially ABS or EVA.

Advantageously, the coating composition further comprises a solvent.

The binder may comprise any one or more polymers selected from the group comprising nitrocellulose, ethyl cellulose, cellulose acetate, cellulose acetate propionate (CAP), cellulose acetate butyrate (CAB), alcohol soluble propionate (ASP), vinyl chloride, vinyl acetate copolymers, vinyl acetate, vinyl, acrylic, polyurethane, polyamide, rosin ester, hydrocarbon, aldehyde, ketone, urethane, polythyleneterephthalate, terpene phenol, polyolefin, silicone, cellulose, polyamide, polyester and rosin ester resins.

The composition is preferably a printing ink. The ink according to the present invention comprises a binder and optionally an auxiliary agent.

With respect to the binder resin, a thermoplastic resin may be used, examples of which include, polyethylene based polymers [polyethylene (PE), ethylene-vinyl acetate copolymer (EVA), vinyl chloride-vinyl acetate copolymer, vinyl alcohol-vinyl acetate copolymer, polypropylene (PP), vinyl based polymers [poly(vinyl chloride) (PVC), poly(vinyl butyral) (PVB), poly(vinyl alcohol) (PVA), poly(vinylidene chloride) (PVdC), poly(vinyl acetate) (PVAc), poly(vinyl formal) (PVF)], polystyrene based polymers [polystyrene (PS), styreneacrylonitrile copolymer (AS), acrylonitrile-butadiene-styrene copolymer (ABS)], acrylic based polymers [poly(methyl methacrylate) (PMMA), MMA-styrene copolymer], polycarbonate (PC), celluloses [ethyl cellulose (EC),cellulose acetate (CA), propyl cellulose (CP), cellulose acetate butyrate (CAB), cellulose nitrate (CN)], fluorin based polymers [polychlorofluoroethylene (PCTFE), polytetrafluoroethylene (PTFE), tetrafluoroethylene-hexafluoroethylene copolymer (FEP), poly(vinylidene fluoride) (PVdF)], urethane based polymers (PU), nylons [type 6, type 66, type 610, type 11], polyesters (alkyl) [polyethylene terephthalate (PET), polybutylene terephthalate (PBT), polycyclohexane terephthalate (PCT)], novolac type phenolic resins. In addition, thermosetting resins such as resol type phenolic resin, a urea resin, a melamine resin, a polyurethane resin, an epoxy resin, an unsaturated polyester, and natural resins such as protein, gum, shellac, copal, starch and rosin may also be used.

Furthermore, to the binder, a plasticizer for stabilizing the flexibility and strength of the print film and a solvent for adjusting the viscosity and drying property thereof may be added according to the needs therefor.

Suitable solvents are selected from water, organic solvents and mixtures thereof. For the purpose of the invention, reactive monomers which also act as solvents are regarded as part of the afore-mentioned binder component b).

The solvent may comprise any one or more of an ester, such as n-propyl acetate, isopropyl acetate, ethyl acetate, butyl acetate; an alcohol, such as ethyl alcohol, industrial methylated spirits, isopropyl alcohol or normal propyl alcohol; a ketone, such as methyl ethyl ketone or acetone; an aromatic hydrocarbon, such as xylene and toluene. A solvent of a low boiling temperature of about 100°C and a petroleum solvent of a high boiling temperature of 250°C or higher, may be used according to the type of the printing method. An alkylbenzene or the like, for example may be used as a solvent of a low boiling temperature. Examples of solvents are ethoxypropanol, methylethylketon, methoxypropylacetate and diacetonalcohol.

Further in addition, an auxiliary agent including a variety of reactive agents for improving drying property, viscosity, and dispersibility, may suitably be added. The auxiliary agents are to adjust the performance of the ink, and for example, a compound that improves the abrasion resistance of the ink surface and a drying agent that accelerates the drying of the ink may be employed.

The printing ink is a formulation wherein the polymeric binder is an oxidative drying resin.

Oxidation is the classical drying mechanism for lithographic inks, involving the oxygen-induced free radical polymerisation of unsaturated (drying) vegetable oils, for example, linseed oil and tung oil. The oxidant is atmospheric oxygen. It is a chemical process which can be catalysed (accelerated) by small amounts of appropriate metal, usually transition metal, driers, such as cobalt and/or manganese catalysts (siccatives). Suitable oxidative drying inks are for example described in EP 807 670.

A typical printing ink formulation comprises
a) 0.0001 to 25 % by weight of the composition as described above,
b) 5 to 74 % by weight of at least one polymeric binder,
c) 0 to 50 % by weight of at least one solvent,
d) 0 to 25 % by weight of at least one colorant, and
e) 0 to 25 % by weight of at least one further additive,
wherein the sum of components a) to e) adds up to 100%.

Suitable colorants d) are selected conventional dyes and in particular conventional pigments. The term "pigment" is used in the context of this invention comprehensively to identify all pigments and fillers, examples being colour pigments, white pigments, and inorganic fillers. These include inorganic white pigments, such as titanium dioxide, preferably in the rutile form, barium sulfate, zinc oxide, zinc sulfide, basic lead carbonate, antimony trioxide, lithopones (zinc sulfide + barium sulfate), or coloured pigments, examples being iron oxides, carbon black, graphite, zinc yellow, zinc green, ultramarine, manganese black, antimony black, manganese violet, Paris blue or Schweinfurt green. Besides the inorganic pigments the printing ink formulation of the invention may also comprise organic colour pigments, examples being sepia, gamboge, Cassel brown, toluidine red, para red, Hansa yellow, indigo, azo dyes, anthraquinonoid and indigoid dyes, and also dioxazine, quinacridone, phthalocyanine, isoindolinone, and metal complex pigments. Also suitable are synthetic white pigments with air inclusions to increase the light scattering, such as the Rhopaque® dispersions. Suitable fillers are, for example, aluminosilicates, such as feldspars, silicates, such as kaolin, talc, mica, magnesite, alkaline earth metal carbonates, such as calcium carbonate, in the form for example of calcite or chalk, magnesium carbonate, dolomite, alkaline earth metal sulfates, such as calcium sulfate, silicon dioxide, etc.

The printing ink formulation according to the invention may contain at least one additive e). Preferably, the printing ink formulation contains from 0 to 25% by weight, more preferably from 0.1 to 20% by weight, in particular from 1 to 15% by weight, based on the total weight of the printing ink formulation, of at least one component e).

Suitable additives (component e)) are selected from plasticizers, waxes, siccatives, antistatic agents, chelators, antioxidants, stabilizers, adhesion promoters, surfactants, flow control agents, defoamers, biocides, thickeners, etc. and combinations thereof. These additives serve in particular for fine adjustment of the application-related properties of the printing ink, examples being adhesion, abrasion resistance, drying rate, or slip.

The printing ink formulations according to the invention are advantageously prepared in a conventional manner, for example by mixing the individual components. Additional colorants may be employed in the printing ink formulation of the invention or in a separate ink formulation. When additional colorants are to be employed in a separate formulation, the time of application of the printing ink formulation according to the invention is usually immaterial. The printing ink formulation according to the invention can for example be applied first and then be overprinted with conventional printing inks. But it is also possible to reverse this sequence or, alternatively, to apply the printing ink formulation according to the invention in a mixture with conventional printing inks. In every case the prints are readable with suitable light sources.

Primers can be applied prior to the printing ink formulation according to the invention. By way of example, the primers are applied in order to improve adhesion to the substrate. It is also possible to apply additional printing lacquers, e.g. in the form of a covering to protect the printed image. Additional printing lacquers may also be applied to serve aesthetic purposes, or serve to control application-related properties. By way of example, suitably formulated additional printing lacquers can be used to influence the roughness of the surface of the substrate, the electrical properties, or the water-vapour-condensation properties. Printing lacquers are usually applied in-line by means of a lacquering system on the printing machine employed for printing the printing ink formulation according to the invention.

The printing ink formulations according to the invention are also suitable for use in multilayer materials. Multilayer materials are e.g. composed of two or more plastics foils, such as polyolefin foils, metal foils, or metallised plastics foils, which are bonded to one another, by way of example, via lamination or with the aid of suitable laminating adhesives. These composites may also comprise other functional layers, such as odour-barrier layers or water-vapour barriers.

Unless otherwise indicated in the following examples and elsewhere in the specification and claims, all parts and percentages are by weight, temperatures are in degrees centigrade and pressures are at or near atmospheric.

A further aspect of the invention is a security document, comprising a substrate and the composition as described above.

The security document is obtainable by a printing process wherein a printing ink formulation as defined above is applied to a substrate.

The security document of the instant invention is selected from a bank note, a passport, a check, a voucher, an ID- or transaction card, a stamp and a tax label.

Also an aspect of the invention is a process for manufacturing a security document comprising applying a composition of
(a) the IR absorber as defined above,
(b) the protective agent as defined above
to a substrate in a printing process.

Yet a further aspect is the use of the protective agent as defined above against oxidative degradation of IR absorbers as defined above in an oxidative drying printing ink for security printing.

The definitions and preferences described above are equally applicable for all aspects of the invention.

The following examples illustrate the invention.

Unless otherwise indicated in the following examples and elsewhere in the specification and claims, all parts and percentages are by weight, temperatures are in degrees centigrade and pressures are at or near atmospheric.

### Application Examples

IR Absorbers used are either commercially available or may be prepared according to standard procedures described, for example in WO2006/015414, US2008/0241492, US5,282,894, WO2007/091094, WO2007/132214, M. Arca et al. describe in J. Chem. Soc., Dalton Trans. 1998, 3731-3736, JP2003-262953 A, JP2004-045653 A, JP2005-99755 A, M.C. Aragoni et al. describe in Eur. J. Inorg. Chem. 2003, 1939-1947 and WO 2008/086931, WO 2012/152584 and WO 2012/069518.

The protective agents are widely items of commerce.

### Testing Conditions

### Application Examples

An offset ink is prepared by mixing the following components by means of an automatic pigment muller:

| | |
|---|---|
| offset varnish | 1000 mg |
| 40 parts by weight rosin modified phenolic res n | |
| 27 parts by weight linseed oil | |
| 33 parts by weight printing-ink oil (boiling range 260-290°C) | |
| (a) IR absorber | 40 mg |
| or | |
| (b) IR absorber/protective agent composition | The effective amount of IR absorber corresponds to (a) |
| Siccative | 20 mg |

The ratio between IR-absorber and protective agent varies from 20mg to 200mg per 40mg IR absorber (0.5 : 1 to 1 : 5).

Immediately afterwards the freshly prepared offset ink is printed onto cotton paper with a printability tester (IGT Orange Proofer). Ink transfer: 1 gram/square centimeter. Remission curves are measured after five days storage at room temperature in the dark with an UV/VIS/IR spectrophotometer. Remission values of stabilized and non-stabilized samples are compared at their lamda max in the NIR range.

### Results

| | | Remission units at Lamda max. | | | |
|---|---|---|---|---|---|
| Compound | Protective Agent | with protective agent | without protective agent | Diff. | Stab.In crease (%) |
| 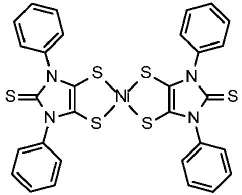 | 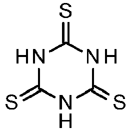 | 35.82 | 53.21 | 17.38 | 137% |
| **(B-1)** | (trithiocyanuric acid) | | | | |
| 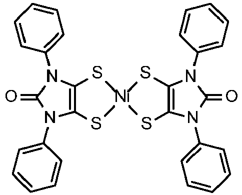 | (trithiocyanuric acid) | 50.68 | 67.34 | 16.66 | 151 |
| **(100)** | | | | | |

## Claims

1. A composition, comprising
(a) an IR absorber, wherein the IR absorber is a metal dithiolene complex of formula (IIa) or (IIb) 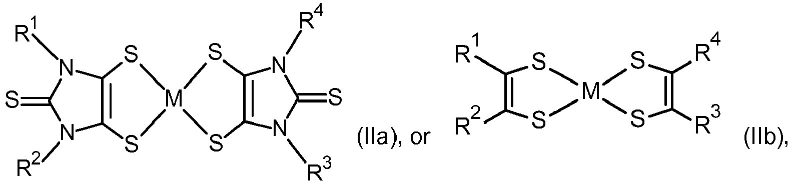 wherein
M is Ni, Pd, or Pt;
R¹, R², R³ and R⁴ are independently of each other C₁-C₂₅alkyl, perfluoro-C₁-C₂₅alkyl, C₆-C₂₄aryl, which may optionally substitueted with F, Cl, CF₃, or OCH₃; or C₂-C₂₀heteroaryl;
(b) a protective agent having a structural element of formula 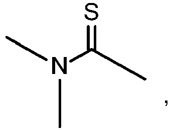 or 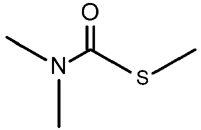 wherein each open valence 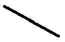 indicates a bond to an organic residue and wherein the structural element may be part of a ring system, wherein the protective agent is a compound of formula (X) 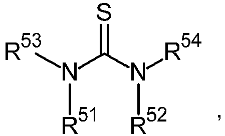 wherein R⁵¹ and R⁵² are independently of each other C₁-C₁₈alkyl, C₁-C₁₈alkenyl or C₆-C₁₀aryl, which may optionally be substituted by Cl, Br or F;
or R⁵¹ and R⁵² together with the atoms to which there are bonded form a ring 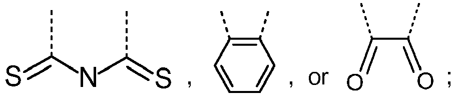 ------ indicates the bond which forms the ring;
R⁵³ and R⁵⁴ are independently of each other H, C₁-C₁₈alkyl or C₁-C₁₈alkenyl which may optionally be substituted by Cl, Br or F; or
a compound of formulae (XI) 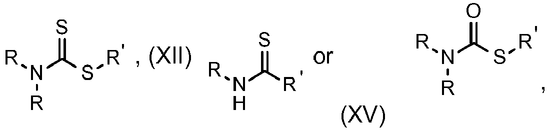 R and R' are independently C₁-C₈alkyl, C₂-C₈alkenyl, phenyl, benzyl, phenethyl, naphthyl or trichlorallyl; or a compound of formula 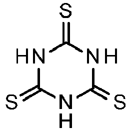 (trithiocyanuric acid), 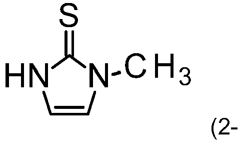 mercapto-1-methylimidazole), 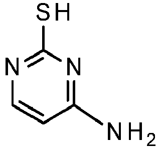 (4-amino-2-mercaptopyrimidine), 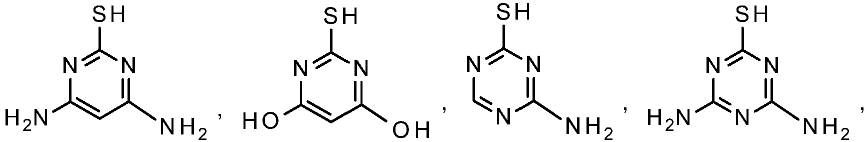 or 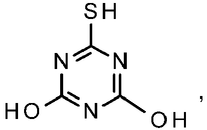 wherein the composition is part of a radically polymerisable composition, which is an oxidatively drying coating, paint, lacquer or ink.

2. The composition according to claim 1, wherein the composition is an oxidatively drying coating.

3. The composition according to claim 1, wherein the composition is an oxidatively drying ink.

4. The composition according to any of claims 1 to 3, wherein the IR absorber is selected from a compound of formulae 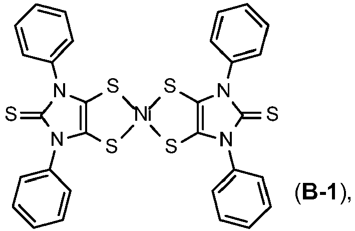 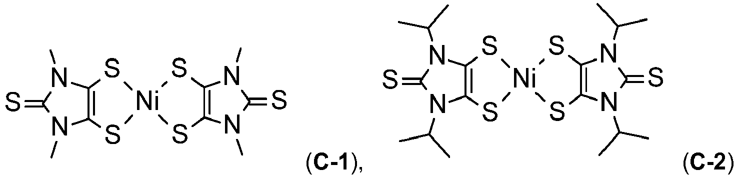 and

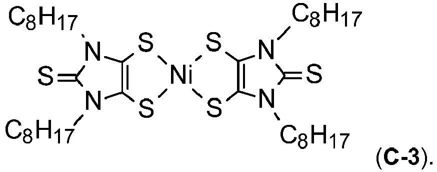

5. The composition according to any of claims 1 to 4, wherein the protective agent is a compound of formula 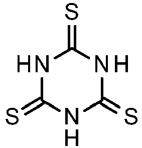 (trithiocyanuric acid), 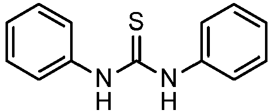 (diphenyl thiourea), 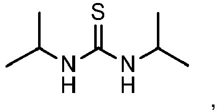 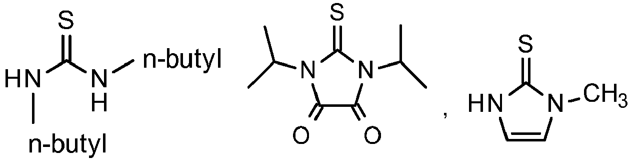 (2-mercapto-1-methylimidazole), 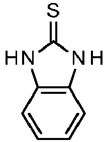 (2-mercapto-benzimidazole), 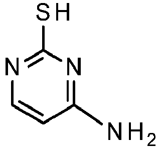 (4-amino-2-mercaptopyrimidine), 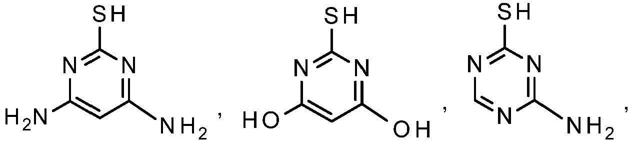 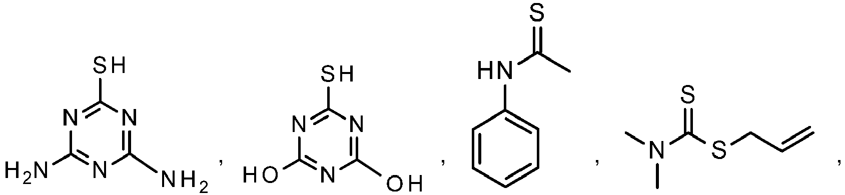 or

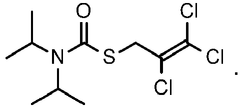

6. The composition according to claim 5, wherein the protective agent is a compound of formula 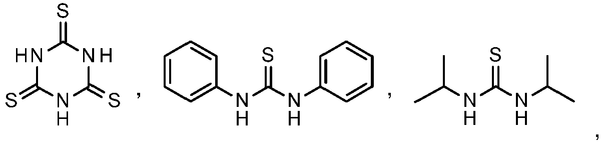 or

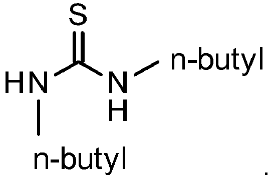

7. The composition according to any of claims 1 to 6, wherein the weight ratio between IR absorber and protective agent varies in a range from 5 : 1 to 1 : 5.

8. A printing ink formulation, especially for security printing, comprising
a) a composition according to any of claims 1, 3 to 7,
b) a polymeric binder,
c) a solvent,
d) optionally at least one colorant, and
e) optionally at least one further additive.

9. A printing ink formulation according to claim 8, wherein the polymeric binder is an oxidative drying resin.

10. The printing ink formulation according to claim 8 or 9, comprising
a) 0.0001 to 25 % by weight of the composition according to any of claims 1 to 7,
b) 5 to 74 % by weight of at least one polymeric binder,
c) 0 to 50 % by weight of at least one solvent,
d) 0 to 25 % by weight of at least one colorant, and
e) 0 to 25 % by weight of at least one further additive,
wherein the sum of components a) to e) adds up to 100%.

11. A security document, comprising a substrate and the composition according to any of claims 1 to 7.

12. A security document, obtainable by a printing process wherein a printing ink formulation as defined in claim 8 to 10 is employed.

13. The security document according to claim 11 or 12, which is selected from a bank note, a passport, a check, a voucher, an ID- or transaction card, a stamp and a tax label.

14. A process for manufacturing a security document comprising applying a composition according to any of claims 1 to 7 to a substrate in a printing process.

15. Use of a protective agent as defined in claim 1 against oxidative degradation of IR absorbers as defined in claim 1 in an oxidative drying printing ink for security printing.

## Patentansprüche

1. Zusammensetzung, umfassend
(a) einen IR-Absorber, wobei es sich bei dem IR-Absorber um einen Metall-Dithiolen-Komplex der Formel (IIa) oder (IIb) handelt: 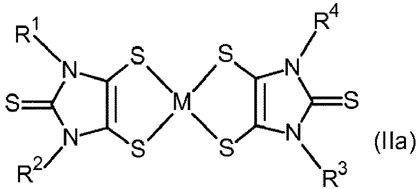 oder 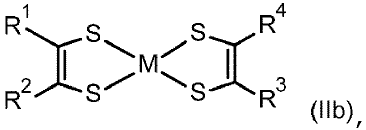 wobei
M für Ni, Pd oder Pt steht;
R¹, R², R³ und R⁴ unabhängig voneinander für C₁-C₂₅-Alkyl, Perfluor-C₁-C₂₅-alkyl, C₆-C₂₄-Aryl, das gegebenenfalls durch F, Cl, CF₃ oder OCH₃ substituiert sein kann, oder C₂-C₂₀-Heteroaryl stehen;
(b) ein Schutzmittel mit einem Strukturelement der Formel 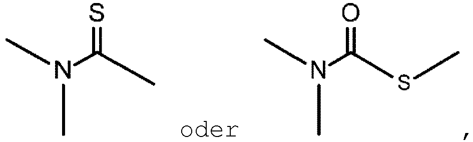 wobei jede offene Valenz 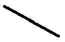 eine Bindung zu einem organischen Rest anzeigt und wobei das Strukturelement Teil eines Ringsystems sein kann, wobei es sich bei dem Schutzmittel um eine Verbindung der Formel (X) 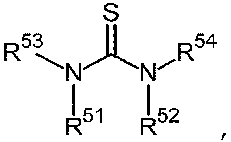 wobei R⁵¹ und R⁵² unabhängig voneinander für C₁-C₁₈-Alkyl, C₁-C₁₈-Alkenyl oder C₆-C₁₀-Aryl, das gegebenenfalls durch Cl, Br oder F substituiert sein kann, stehen
oder R⁵¹ und R⁵² zusammen mit den Atomen, an die sie gebunden sind, einen Ring 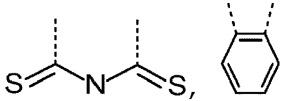 oder 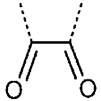 bilden; 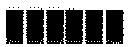 die den Ring bildende Bindung anzeigt;
R⁵³ und R⁵⁴ unabhängig voneinander für H, C₁-C₁₈-Alkyl oder C₁-C₁₈-Alkenyl, das gegebenenfalls durch Cl, Br oder F substituiert sein kann, stehen; oder
eine Verbindung der Formel (XI) 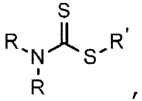 (XII) 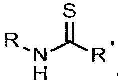 oder (XV) 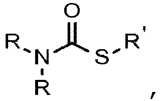 R und R' unabhängig für C₁-C₈-Alkyl, C₂-C₈-Alkenyl, Phenyl, Benzyl, Phenethyl, Naphthyl oder Trichlorallyl stehen; oder
eine Verbindung der Formel 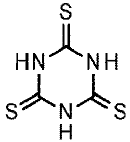 (Thiocyanursäure), 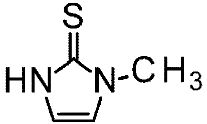 (2-Mercapto-1-methylimidazol), 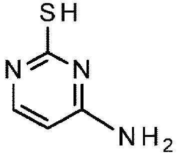 (4-Amin-2-mercaptopyrimidin), 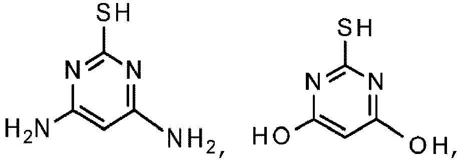 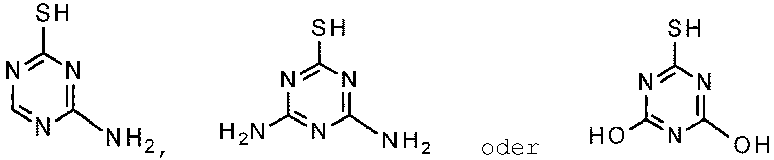 handelt,
wobei die Zusammensetzung Teil einer radikalisch polymerisierbaren Zusammensetzung ist, bei der es sich um einen oxidativ trocknenden Überzug, ein oxidativ trocknendes Anstrichmittel, einen oxidativ trocknenden Lack oder eine oxidativ trocknende Tinte oder Farbe handelt.

2. Zusammensetzung nach Anspruch 1, wobei es sich bei der Zusammensetzung um einen oxidativ trocknenden Überzug handelt.

3. Zusammensetzung nach Anspruch 1, wobei es sich bei der Zusammensetzung um eine oxidativ trocknende Tinte oder Farbe handelt.

4. Zusammensetzung nach einem der Ansprüche 1 bis 3, wobei der IR-Absorber aus einer Verbindung der Formeln 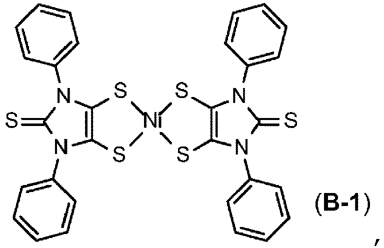 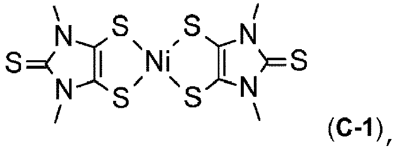 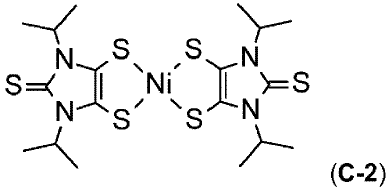 und 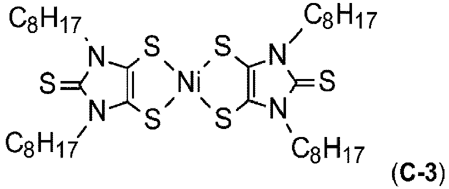 ausgewählt ist.

5. Zusammensetzung nach einem der Ansprüche 1 bis 4, wobei es sich bei dem Schutzmittel um eine Verbindung der Formel 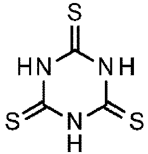 (Trithiocyanursäure), 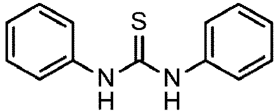 (Diphenylthioharnstoff), 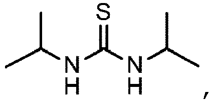 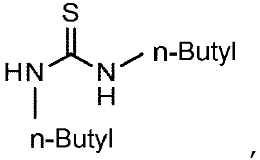 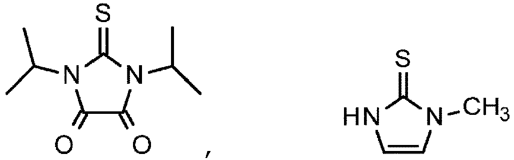 (2-Mercapto-1-methylimidazol), 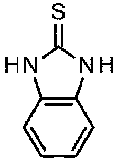 (2-Mercaptobenzimidazol), 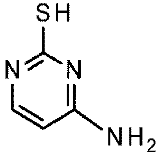 (4-Amino-2-mercaptopyrimidin), 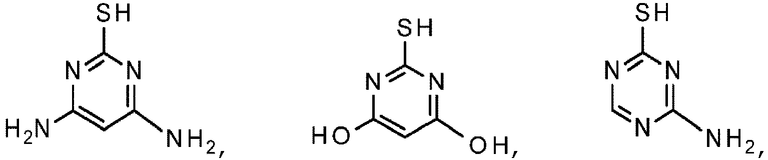 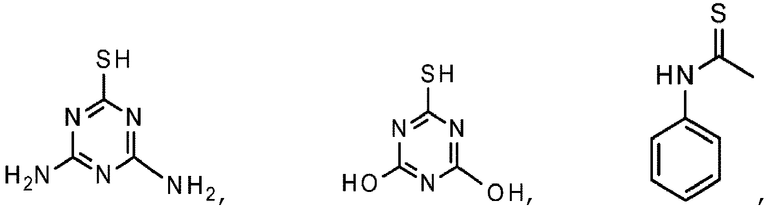 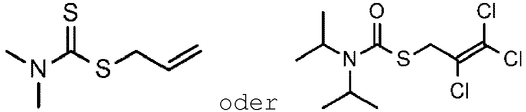 handelt.

6. Zusammensetzung nach Anspruch 5, wobei es sich bei dem Schutzmittel um eine Verbindung der Formel 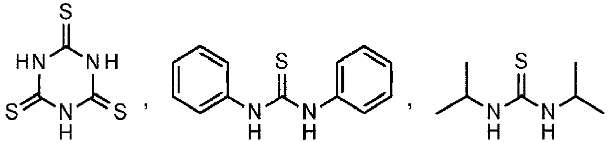 oder 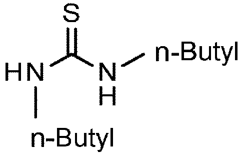 handelt.

7. Zusammensetzung nach einem der Ansprüche 1 bis 6, wobei das Gewichtsverhältnis zwischen IR-Absorber und Schutzmittel in einem Bereich von 5:1 bis 1:5 variiert.

8. Druckfarbenformulierung, insbesondere für den Sicherheitsdruck, umfassend
a) eine Zusammensetzung nach einem der Ansprüche 1, 3 bis 7,
b) ein polymeres Bindemittel,
c) ein Lösungsmittel,
d) gegebenenfalls mindestens ein Farbmittel und
e) gegebenenfalls mindestens ein weiteres Additiv.

9. Druckfarbenformulierung nach Anspruch 8, wobei es sich bei dem polymeren Bindemittel um ein oxidativ trocknendes Harz handelt.

10. Druckfarbenformulierung nach Anspruch 8 oder 9, umfassend
a) 0,0001 bis 25 Gew.-% der Zusammensetzung nach einem der Ansprüche 1 bis 7,
b) 5 bis 74 Gew.-% mindestens eines polymeren Bindemittels,
c) 0 bis 50 Gew.-% mindestens eines Lösungsmittels,
d) 0 bis 25 Gew.-% mindestens eines Farbmittels und
e) 0 bis 25 Gew.-% mindestens eines weiteren Additivs,
wobei sich die Summe der Komponenten a) bis e) zu 100 % addiert.

11. Sicherheitsdokument, umfassend ein Substrat und die Zusammensetzung nach einem der Ansprüche 1 bis 7.

12. Sicherheitsdokument, das durch ein Druckverfahren erhältlich ist, bei dem eine Druckfarbenformulierung gemäß Anspruch 8 bis 10 eingesetzt wird.

13. Sicherheitsdokument nach Anspruch 11 oder 12, das aus einer Banknote, einem Pass, einem Scheck, einem Gutschein, einem Ausweis, einer Transaktionskarte, einer Marke und einem Steuerzeichen ausgewählt ist.

14. Verfahren zur Herstellung eines Sicherheitsdokuments, bei dem man eine Zusammensetzung nach einem der Ansprüche 1 bis 7 in einem Druckverfahren auf ein Substrat aufbringt.

15. Verwendung eines Schutzmittels gemäß Anspruch 1 gegen oxidativen Abbau von IR-Absorbern gemäß Anspruch 1 in einer oxidativ trocknenden Druckfarbe für den Sicherheitsdruck.

## Revendications

1. Composition comprenant :
(a) un absorbeur d'IR, l'absorbeur d'IR étant un complexe de métal-dithiolène ayant la formule (IIa) ou (IIb) 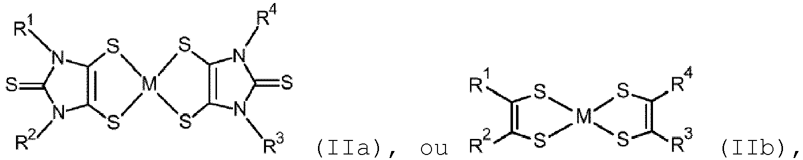 où
M est Ni, Pd, ou Pt ;
R¹, R², R³ et R⁴ sont indépendamment les uns des autres un groupe alkyle C₁-C₂₅, perfluoroalkyle C₁-C₂₅, ou aryle C₆-C₂₄, qui peut optionnellement être substitué par F, Cl, ou un groupe CF₃ ou OCH₃ ; ou un groupe hétéroaryle C₂-C₂₀ ;
(b) un agent de protection comportant un élément structural ayant la formule 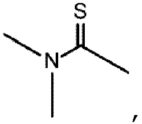 ou 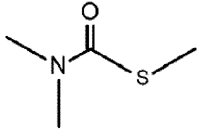 où chaque valence ouverte indique une liaison à un résidu organique et où l'élément structural peut faire partie d'un système cyclique,
dans laquelle l'agent de protection est un composé ayant la formule (X) 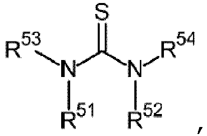 où R⁵¹ et R⁵² sont indépendamment l'un de l'autre un groupe alkyle C₁-C₁₈, alcényle C₁-C₁₈ ou aryle C₆-C₁₀, qui peut optionnellement être substitué par Cl, Br ou F ;
ou R⁵¹ et R⁵², conjointement avec les atomes auxquels ils sont liés, forment un cycle 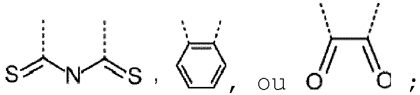 --- indique la liaison qui forme le cycle ;
R⁵³ et R⁵⁴ sont indépendamment l'un de l'autre H ou un groupe alkyle C₁-C₁₈ ou alcényle C₁-C₁₈ qui peut optionnellement être substitué par Cl, Br ou F ; ou
un composé selon les formules (XI) 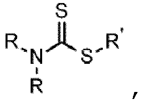 (XII) 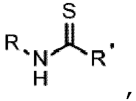 ou (XV) 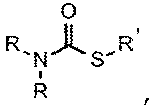 R et R' sont indépendamment un groupe alkyle C₁-C₈, alcényle C₂-C₈, phényle, benzyle, phénéthyle, naphtyle ou trichlorallyle ; ou
un composé ayant la formule 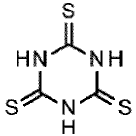 (acide trithiocyanurique), 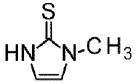 (2-mercapto-1-méthylimidazole), 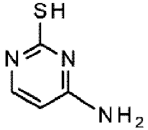 (4-amino-2-mercaptopyrimidine), 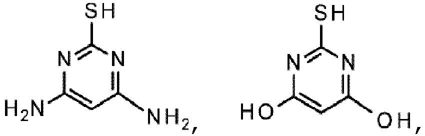 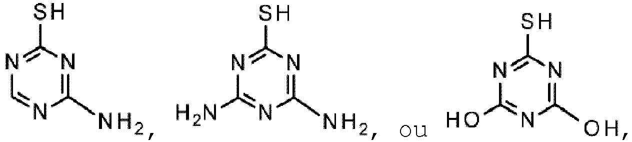 la composition faisant partie d'une composition polymérisable par polymérisation radicalaire, qui est un revêtement, une peinture, une laque ou une encre à séchage oxydatif.

2. Composition selon la revendication 1, la composition étant un revêtement à séchage oxydatif.

3. Composition selon la revendication 1, la composition étant une encre à séchage oxydatif.

4. Composition selon l'une quelconque des revendications 1 à 3, dans laquelle l'absorbeur d'IR est sélectionné parmi un composé ayant les formules 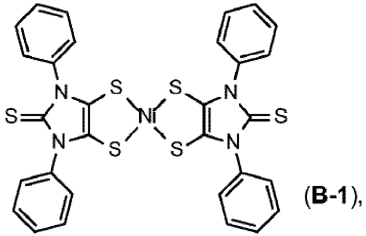 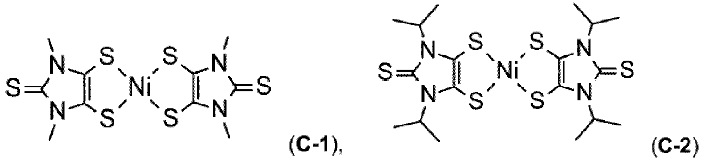 et

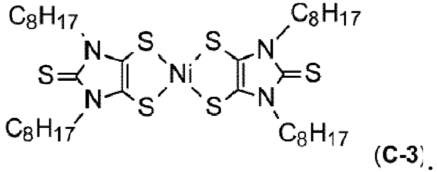

5. Composition selon l'une quelconque des revendications 1 à 4, dans laquelle l'agent de protection est un composé ayant la formule 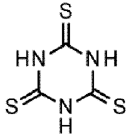 (acide trithiocyanurique), 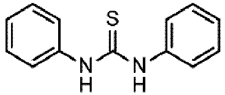 (diphénylthiourée), 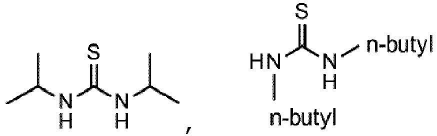 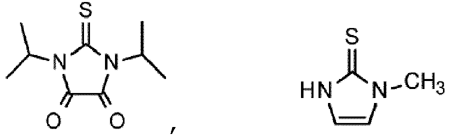 (2-mercapto-1-méthylimidazole), 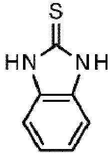 (2-mercapto-benzimidazole), 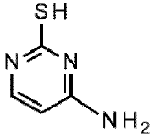 (4-amino-2-mercaptopyrimidine),

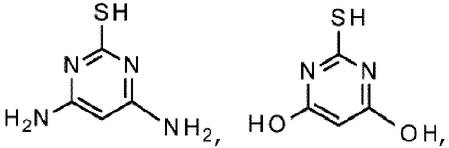

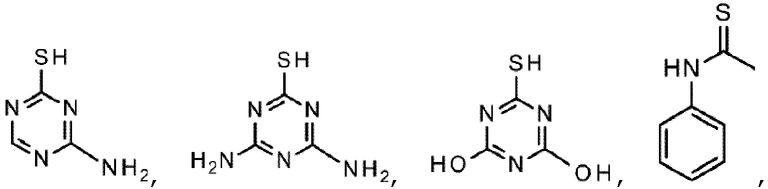

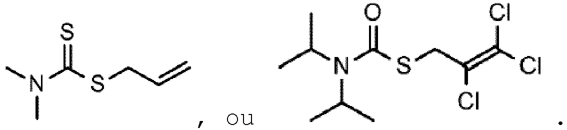

6. Composition selon la revendication 5, dans laquelle l'agent de protection est un composé ayant la formule

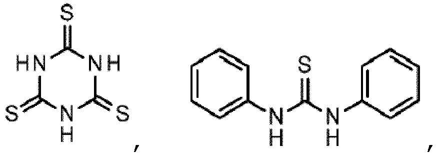

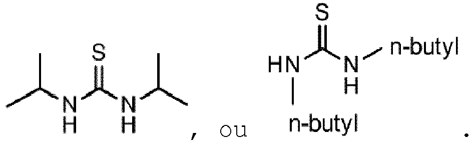

7. Composition selon l'une quelconque des revendications 1 à 6, dans laquelle le rapport pondéral entre l'absorbeur d'IR et l'agent de protection est de 5:1 à 1:5.

8. Formulation d'encre d'impression, en particulier pour l'impression de sécurité, comprenant :
a) une composition selon l'une quelconque des revendications 1, 3 à 7,
b) un liant polymère,
c) un solvant,
d) optionnellement au moins un colorant, et
e) optionnellement au moins un additif supplémentaire.

9. Formulation d'encre d'impression selon la revendication 8, dans laquelle le liant polymère est une résine à séchage oxydatif.

10. Formulation d'encre d'impression selon la revendication 8 ou 9, comprenant :
a) 0,0001 à 25 % en poids de la composition selon l'une quelconque des revendications 1 à 7,
b) 5 à 74 % en poids d'au moins un liant polymère,
c) 0 à 50 % en poids d'au moins un solvant,
d) 0 à 25 % en poids d'au moins un colorant, et
e) 0 à 25 % en poids d'au moins un additif supplémentaire,
la somme des constituants a) à e) représentant au total 100 %.

11. Document de sécurité, comprenant un substrat et la composition selon l'une quelconque des revendications 1 à 7.

12. Document de sécurité, pouvant être obtenu par un procédé d'impression dans lequel une formulation d'encre d'impression telle que définie dans les revendications 8 à 10 est utilisée.

13. Document de sécurité selon la revendication 11 ou 12, lequel est sélectionné parmi un billet de banque, un passeport, un chèque, un bon, une carte d'identité ou de paiement, un timbre, et un timbre fiscal.

14. Procédé de fabrication d'un document de sécurité, comprenant l'application d'une composition selon l'une quelconque des revendications 1 à 7 sur un substrat dans un procédé d'impression.

15. Utilisation d'un agent de protection tel que défini dans la revendication 1 contre la dégradation oxydative d'absorbeurs d'IR tels que définis dans la revendication 1 dans une encre d'impression à séchage oxydatif pour l'impression de sécurité.
